# EUROPEAN PATENT APPLICATION

(11) **EP 2 696 573 A2**
(43) Date of publication of application: **12.02.2014**
(21) Application number: 11859264.1
(22) Date of filing: 29.12.2011
(51) Int. Cl.: H04N 5/262

(54) **METHOD FOR GENERATING A PANORAMIC IMAGE, USER TERMINAL DEVICE, AND COMPUTER-READABLE RECORDING MEDIUM**

(30) Priority: 21.02.2011 KR 20110015125
(71) Applicant: Olaworks, Inc., Seoul 135-919 (KR)
(72) Inventor: PARK, Bong Cheol, Seoul 151-050 (KR)
(74) Representative: Goddar, Heinz J.
(86) International application number: PCT/KR2011/010349
(87) International publication number: WO 2012/115347

(57) **Abstract**

According to one aspect of the present invention, a method for generating a panoramic image includes: (a) generating first and second adjustment images by adjusting the resolutions of first and second input images; (b) generating first and second pre-processing images representing edge information by referring to a tangent vector perpendicular to a gradient vector representing a change in intensity or color with respect to each of the first and second adjustment images; and (c) determining a position at which the first and second input images are combined by referring to a matching result between the first and second pre-processing images.

## Description

### Technical Field

The present invention relates to a method, a terminal and a computer-readable recording medium for generating a panoramic image. More specifically, the present invention relates to the method, the user terminal and the computer-readable recording medium for performing a resolution adjusting process in which a resolution of an image that is a subject for image matching is reduced step by step by using a pyramidal structure and a pre-processing process in which edges in the image are visually expressed with a tangent vector vertical to the gradient vector representing changes in intensity or color to thereby improve accuracy and operation speed of generating the panoramic image.

### Background Technology

Recently, as digital cameras have become popular and digital processing technologies have developed, a variety of services using an image including complete views viewed from a random point, so-called panoramic image, are being introduced.

As an example of a service using panoramic images, a service for supporting users to acquire panoramic images by automatically synthesizing multiple images taken consecutively in the use of portable terminals which have photographic equipment with a relatively narrow angle of view was also introduced.

Generally, while panoramic images are created by putting boundaries of multiple consecutive images together and synthesizing them, the quality of the panoramic images may depend on how accurately the boundaries of adjacent images are put together. According to conventional technology for generating panoramic image, a panoramic image is created by synthesizing the original copies of photographed images as they are or synthesizing the original copies of photographed images from which just noise is removed.

According to the conventional technology, the contours of important objects such as buildings included in the original image and those of meaningless objects such as dirt, however, may not be divided clearly, which may cause the problem of the synthesis of images becoming less accurate. In addition, since the original image contains many features to be considered when the boundaries of the adjacent images are matched, it may cause a great number of operations to be required to generate the panoramic image. These problems may be more serious in a mobile environment where portable user terminals with relatively poor operational capabilities are used.

Therefore, the inventor of the present invention came to invent a technology for effectively generating panoramic images even in a mobile environment by applying a method for adjusting the resolution of an image step by step and a method for characterizing images for simplifying the image by emphasizing only important part(s) of the image.

### Detailed Description of the Invention

### Technical Task

It is an objective of the present invention to solve all the problems mentioned above.

It is another objective of the present invention to reduce the resolution of an image which is a subject of image matching and diminish operations required for image matching by using image pyramid technology, to thereby generate a panoramic image.

In addition, it is still another objective of the present invention to emphasize important parts of an image and simplify the image by performing a pre-processing process in which edges in the image are visually expressed with a tangent vector vertical to the gradient vector representing changes in intensity or color to thereby generate a panoramic image.

### Means for Task Resolution

A representative configuration of the present invention for achieving the above objectives is described below:

In accordance with one aspect of the present invention, there is provided a method for generating a panoramic image comprising, (a) a step in which resolutions of first and second input images are respectively adjusted to thereby generate first and second adjusted images, wherein the resolutions of the first and the second adjusted images are determined by referring to preset relationship data with respect to the resolutions of the adjusted images versus the input images; (b) a step in which first and second pre-set images are respectively generated which represent information on edges of the first and the second adjusted images by referring to a tangent vector vertical to a gradient vector showing changes in intensity or color of the first and the second adjusted images, respectively, and (c) a step in which image matching operations between the first and the second pre-processed images are performed and then a position is determined where the first and the second input images are synthesized by referring to results of the image matching operations.

In accordance with another aspect of the present invention, there is provided a user terminal for generating a panoramic image comprising, a resolution adjusting part that adjusts resolutions for first and second input images, respectively, to thereby generate first and second adjusted images, wherein the resolutions of the first and the second adjusted images are determined by referring to preset relationship data with respect to the resolutions of the adjusted images versus the input images, a pre-processing part that generates first and second pre-processed images which represent information on edges of the first and the second adjusted images by referring to a tangent vector vertical to a gradient vector showing changes in intensity or color of the first and the second adjusted images, respectively, and a matching part that performs image matching operations between the first and the second pre-processed images and then determines a position where the first and the second input images should be synthesized by referring to the results of the image matching operations.

In addition, other methods, systems, and computer-readable recording media for recording a computer program to execute the methods that are intended to implement the present invention are further provided.

### Effects of the Invention

In accordance with the present invention, since the resolution of an image may be reduced to reduce operations required for image matching, the time required for generating a panoramic image can be reduced.

In addition, in accordance with the present invention, since an image may be characterized and simplified by using the image which expresses edges in the image with a tangent vector vertical to a gradient vector representing the change in intensity or color which is the subject of image matching, the effect is that the accuracy of synthesizing panoramic image is guaranteed and its operation speed is improved.

### Brief Description of the Drawings

Figure 1 is a drawing that illustratively presents an internal configuration of a user terminal (100) in accordance with one example embodiment of the present invention.
Figure 2 is a drawing that visually illustrates a result of calculating a gradient vector in an image in accordance with one example embodiment of the present invention.
Figure 3 is a diagram that visually shows a result of calculating a tangent vector in an image in accordance with one example embodiment of the present invention.
Figures 4 and 5 are drawings that illustratively present an original image and its pre-processed image respectively in accordance with one example embodiment of the present invention.
Figures 6 is a drawing that illustratively presents results of generating respective panoramic images by synthesizing two adjacent input images in accordance with one example embodiment of the present invention.

### <Description of Reference Numerals>

100: user terminal
110: resolution adjusting part
120: pre-processing part
130: matching part
140: synthesizing and blending part
150: communication part
160: control part

### Forms for Embodiment of the Invention

The attached figures are examples that will help explain the invention in detail. These examples are described in sufficient detail to enable those skilled in the art to practice the invention. It is to be understood that the various examples of the invention, although different, are not necessarily mutually exclusive.

For example, a particular feature, structure, or characteristic described herein in connection with one example may be implemented within other examples without departing from the spirit and scope of the invention. In addition, it is to be understood that the location or arrangement of individual elements within each disclosed example may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In the following is described the present invention in detail referring to the preferred examples of the present invention so that those having common knowledge of the technical field to which the present invention belongs may easily practice the present invention.

### [Preferred Embodiments of the Present Invention]

In the present specification, a panoramic image means an image acquired as a result of photographing a complete view viewed from a point and more specifically, a type of the image capable of offering visual information in all directions actually shown at a shooting point three-dimensionally and realistically by expressing pixels constructing the image in a virtual celestial sphere whose center is the shooting point according to spherical coordinates. Further, while it is not directly illustrated in the present specification, the panoramic image may be an image expressing the pixels constructing the image according to cylindrical coordinates.

### Configuration of User Terminal

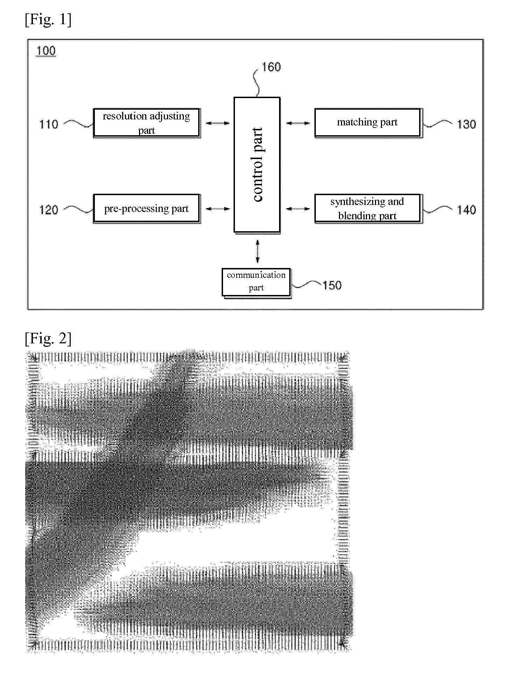

Figure 1 is a drawing that illustratively presents an internal configuration of a user terminal (100) in accordance with one example embodiment of the present invention.

By referring to Figure 1, the user terminal (100) in accordance with one example embodiment of the present invention may include a resolution adjusting part (110), a pre-processing part (120), a matching part (130), a synthesizing and blending part (140), a communication part (150) and a control part (160). In accordance with one example embodiment of the present invention, at least some of the resolution adjusting part (110), the pre-processing part (120), the matching part (130), the synthesizing and blending part (140), the communication part (150) and the control part (160) may be program modules communicating with the user terminal (100). Such program modules may be included in the user terminal (100) in the form of an operating system, an application program module and other program modules, and they may be physically stored in various storage devices well known to those skilled in the art. Or, such program modules may be stored in a remote storage device capable of communicating with the user terminal (100). On the other hand, such program modules include but are not be limited to a routine, a subroutine, a program, an object, a component, and a data structure for executing a specific operation or a type of specific abstract data that will be described in accordance with the present invention.

First, in accordance with one example embodiment of the present invention, the resolution adjusting part (110) may perform the function of generating the image with adjusted resolution (hereinafter, 'adjusted image') by adjusting resolutions of input images which are subj ects of syntheses for generating a panoramic image. Herein, the resolution of the adjusted image may also be determined by referring to preset relationship data regarding the resolution of the adjusted image versus the input image.

More specifically, the adjusting part (110) in accordance with one example embodiment of the present invention resolution may determine the resolution of the adjusted image by diminishing its resolution step by step by using a pyramid structure for which a matching rate between adjacent adjusted images in the preset overlapped region where the adjacent adjusted images are overlapped satisfies a preset level. Herein, the preset overlapped region means a region where adjacent images are overlapped when the adjacent images are placed close enough to be overlapped as expected statistically or empirically before image matching is performed to put multiple images together to generate a panoramic image. For example, the overlapped region, as a region corresponding to the boundaries including top, bottom, left and right of the image, may be set to be a region accounting for 10% of the whole area of the image. In the following is examined more specifically a process of deciding the resolution of the adjusted image in accordance with one example embodiment of the present invention.

For example, it may be assumed that adjacent input images A and B are 1920 x 1080 pixels with the preset matching rate of 80% and the resolutions of the input images A and B are reduced step by step by 1/4 by using the pyramid structure. In such an instance, in accordance with one example embodiment of the present invention, assuming that a matching rate of the first adjusted images A and B (whose resolutions become 960 x 540 pixels respectively, thanks to reduction by 1/4) in a preset overlapped region reaches 84%, since the matching rate of the first adjusted images A and B satisfies the preset matching rate (80%), it may be possible to temporarily determine the resolutions of the first adjusted images A and B as 960 x 540 pixels, respectively, and then reduce the resolutions thereof by one fourth again respectively at the next step. At the second reduction step, if a matching rate of the second adjusted images A and B in the preset overlapped region whose resolutions are 480 x 270 pixels due to the reduction by one fourth again is 65%, it fails to satisfy the preset matching rate (80%). Therefore, the process for reducing the resolutions is suspended, and then the resolutions of the adjusted images A and B may be finally determined as 960 x 540 pixels which are the resolutions of the first adjusted images. However, the process for acquiring relationship data in the present invention is not limited only to the method mentioned above and it can obviously be changed within the scope of achieving the objectives of the present invention.

Next, in accordance with one example embodiment of the present invention, the pre-processing part (120) may perform a function for generating an image for which pre-processing has been performed (hereinafter, 'pre-processed image') which expresses information on edges (i.e., contour) in the input image(s) whose resolution is adjusted by the resolution adjusting part (110), wherein the edges are acquired by referring to the tangent vector vertical to the gradient vector which represents the changes in intensity or color in the adjusted image. In the following is a more detailed explanation on the pre-processing process in accordance with one example embodiment of the present invention.

First, the pre-processing part (120) in accordance with one example embodiment of the present invention may calculate the gradient vector representing the changes in intensity or color which is a scalar value with respect to respective pixels in the two-dimensional adjusted image. Herein, the direction of the gradient vector may be determined in the direction of maximum changes in intensity or color and the magnitude of the gradient vector may be decided to be the rate of change in the direction of the maximum changes in intensity or color. In general, because the magnitude of the gradient vector is large in some parts, such as contours of an object, where the changes in intensity or color are great and on the other hand the magnitude of the gradient vector is small in other parts where the changes in intensity or color are small, the edges included in the adjusted image may be detected by referring to the gradient vector. In accordance with one example embodiment of the present invention, the Sobel operator may be used to calculate the gradient vector in the adjusted image. But it is not limited only to this, and other operators for computing the gradient vector to detect edges in the adjusted image may be also applied.

Figure 2 is a drawing that visually illustrates a result of calculating gradient vector components in an image in accordance with one example embodiment of the present invention.

By referring to Figure 2, the direction and the magnitude of the gradient vector are expressed by blue lines. It may be found that a length of a blue line appears long in a part where a change in intensity or color is great while a length of a blue line is short or does not appear at all in a part where a change in intensity or color is small.

Herein, the pre-processing part (120) in accordance with one example embodiment of the present invention may perform a function of calculating a tangent vector by rotating the gradient vector calculated for respective pixels of the two-dimensional adjusted image, for example, by 90 degrees counterclockwise. Since the calculated tangent vector is parallel to virtual outlines drawn based on the scalar value of intensity or color, the visually expressed tangent vector may present the shapes same as those along the edges of the contour, etc. of the object included in the adjusted image. Accordingly, the pre-processed image which visually illustrates the tangent vector in the adjusted image may play a role itself as an edge image by emphasizing and presenting only the edges included in the adjusted image.

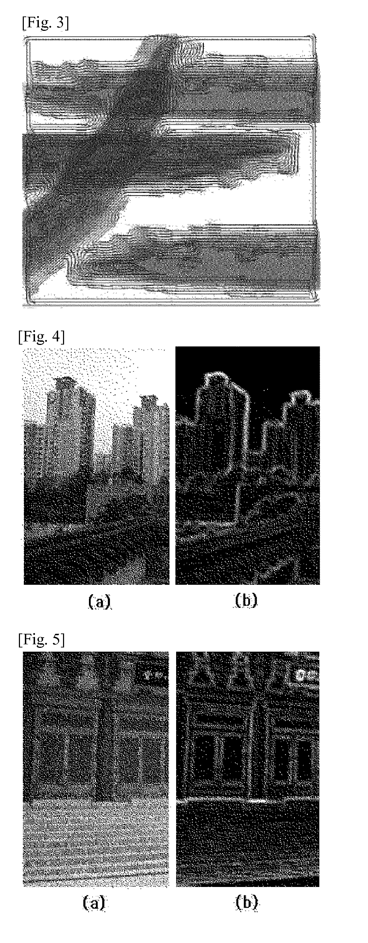

Figure 3 is a diagram that visually shows a result of calculating the tangent vector in an image in accordance with one example embodiment of the present invention.

By referring to Figure 3, it may be found that the tangent vector whose directions and magnitudes are expressed by blue lines are parallel along parts whose changes in intensity or color in the image are great, i.e., edges.

On the other hand, as an example of a technology available to compute tangent vector in an image, it is possible to refer to an article entitled "Coherent Line Drawing" co-authored by H. KANG and two others and published in 2007 in "ACM Symposium on Non-Photorealistic Animation and Rendering" (the whole content of the article must be considered to have been combined in the present specification). The article describes a method for calculating edge tangent flow (ETF) in an image as a step of the method for automatically illustrating lines corresponding to the contours included in the image. Of course, the technology for calculating the tangent vector applicable to the present invention is not limited only to the method described in the aforementioned article and various modified examples may be applied to implement the present invention.

On Figures 2 and 3, while the lines for parts where the changes in intensity or color are great are long, the lines for parts where the changes in intensity or color are small are short but it is not limited only to this. As shown in Figures 4 and 5, such modified example may be introduced where pixels are expressed more brightly as the magnitude of tangent vector becomes larger and that pixels are expressed more darkly as the magnitude of the tangent vector becomes smaller.

Figure 4 and Figure 5 are drawings that illustratively present an original image and its pre-processed image respectively in accordance with one example embodiment of the present invention. By reference, the pre-processed images in Figure 4(b) and Figure 5(b) are the images whose pixels are expressed brightly if the magnitude of the tangent vector is large.

By referring to Figures 4 and 5, in comparison with the original input images (Figures 4(a) and 5(a)), the pre-processed images (Figures 4(b) and 5(b)) may be confirmed that the original input images are featured and simplified by emphasizing important parts including contours of the object and boldly omitting unimportant parts.

As examined above, the use of the pre-processed image, which is acquired as a result of performing a process of reducing the resolution of the original input image to a reasonable level and then a pre-processing process to visually express the edges with the tangent vector for the adjusted image as an image for matching process to be explained below enables the improvement of the accuracy of image matching and increasing the operational speed of image matching at the same time.

Next, in accordance with one example embodiment of the present invention, the matching part (130) may perform image matching operations between adjacent pre-processed images by using the pre-processed images which are generated by the pre-processing part (120) and perform a function of determining an optimal overlapped position between the original input images corresponding to the pre-processed images by referring to the results of the matching. For example, the matching part (130) in accordance with one example embodiment of the present invention may perform the image matching operations between the pre-processed images at the aforementioned preset overlapped region first.

Next, in accordance with one example embodiment of the present invention, the synthesizing and blending part (140), additionally, may synthesize the adjacent input images by referring to the synthesis position determined by the matching part (130) and perform a blending process to make the connected portion in the synthesized input images look natural.

On the other hand, as an example of a technology available for matching, synthesizing and blending images, an article entitled "Panoramic Imaging System for Camera Phones" co-authored by Karl Pulli and four others and published in 2010 in the "International Conference on Consumer Electronics" may be referred to (the whole content of the article may be considered to have been combined in the present specification). The article describes a method for performing image matching between adjacent images by using feature-based matching technology combined with RANSAC (RANdom SAmple Consensus) and a method for processing connected portions of the adjacent images softly by using an alpha blending technology. Of course, the synthesis and blending technologies applicable for the present invention is not limited only to the method described in the aforementioned article and various modified examples may be applied to implement the present invention.

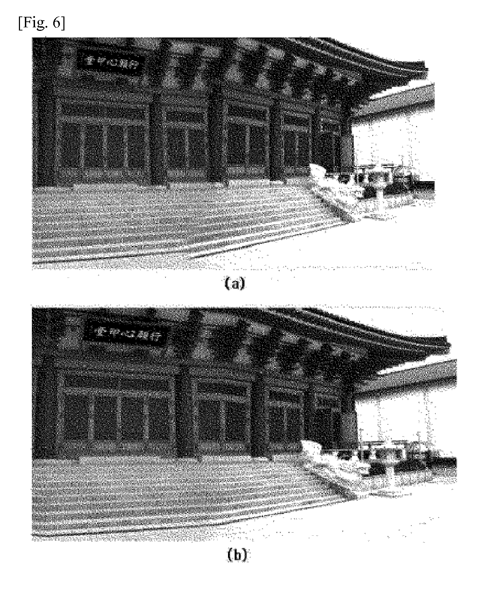

Figure 6 is a drawing that illustratively presents results of generating respective panoramic images by synthesizing two adjacent input images in accordance with one example embodiment of the present invention. By reference, panoramic images illustrated in Figure 6 were acquired as a result of synthesizing two taken input images of a traditional styled building viewed from different angles. Figure 6(a) is a drawing representing a result of generating a panoramic image without going through the process of adjusting the resolution and then the process of pre-processing, while Figure 6(b) is a drawing showing a result of generating a panoramic image through the process of adjusting the resolution and then the process of pre-processing in accordance with one example embodiment of the present invention.

By referring to Figures 6, the panoramic image on Figure 6(b) in accordance with the present invention may be confirmed to be generated more accurately and more naturally than the existing panoramic image in Figure 6(a) and particularly, it may be confirmed that there are big differences between the part of the stairs and the part of pillars located to the right of the signboard.

The communication part (150) in accordance with one example embodiment of the present invention performs the function of allowing the user terminal (100) to communicate with an external device (not illustrated).

The control part (160) in accordance with one example embodiment of the present invention performs the function of controlling data flow among the resolution adjusting part (110), the pre-processing part (120), the matching part (130), the synthesizing and blending part (140) and the communication part (150). In other words, the control part (160) controls the flow of data from outside or among the components of the user terminal (100) to thereby force the resolution adjusting part (110), the pre-processing part (120), the matching part (130), the synthesizing and blending part (140) and the communication part (150) to perform their unique functions.

The examples described above according to the present invention can be implemented in a form of program command that may be executed through a variety of computer components and recorded on computer-readable recording media. The computer readable media may include solely or in combination, program commands, data files and data structures. The program commands recorded on the computer-readable recording medium may be specially designed and configured for the present invention or may be known and be usable by a person skilled in the field of computer software.

Examples of the computer-readable recording medium include magnetic media such as a hard disk, floppy disk, and magnetic tape; optical media such as a CD-ROM and DVD; magnetooptical media such as a floptical disk and hardware devices such as a ROM, RAM and flash memory specially configured to store and execute program commands. Program commands include not only a machine language code made by a compiler but also a high level code that can be used by an interpreter etc., which is executed by a computer. The hardware device may be configured to work as one or more software modules to perform the action according to the present invention, and its reverse is also the same.

While the present invention has been described so far by certain details such as specific components and limited examples and drawings, they were merely provided to promote overall understanding of the present invention, and the present invention is not limited by the examples above. A person with common knowledge of the field to which the present invention belongs may attempt various modifications and changes based on such descriptions.

Therefore, the idea of the present invention must not be confined to the explained examples, and the claims to be described later as well as everything including variations equal or equivalent to the claims would belong to the category of the idea of the present invention.

## Claims

1. A method for generating a panoramic image comprising,
(a) a step in which resolutions of first and second input images are respectively adjusted to thereby generate first and second adjusted images, wherein the resolutions of the first and the second adjusted images are determined by referring to preset relationship data with respect to the resolutions of the adjusted images versus the input images,
(b) a step in which first and second pre-processed images are respectively generated which represent information on edges of the first and the second adjusted images by referring to a tangent vector vertical to a gradient vector showing changes in intensity or color of the first and the second adjusted images, respectively, and
(c) a step in which image matching operations between the first and the second pre-processed images are performed and then a position is determined where the first and the second input images are synthesized by referring to results of the image matching operations.

2. The method recited in Claim 1 wherein, (d) it further comprises a step in which a panoramic image is generated by synthesizing the first and the second input images in accordance with the synthesis position determined and then blending the synthesized first and second input images.

3. The method recited in Claim 1 wherein, in step (a), the resolutions of the first and the second adjusted images are determined within a scope of a matching rate between the first and the second adjusted images satisfying the preset level in a region where the first and the second adjusted images are overlapped.

4. The method recited in Claim 1 wherein the gradient vector is calculated by a Sobel operator.

5. The method recited in Claim 1 wherein the tangent vector is a vector acquired after rotating the gradient vector by 90 degrees counterclockwise.

6. The method recited in Claim 1 wherein the image matching between the first and the second pre-processed images is performed by using a feature-based matching technology combined with RANSAC (RANdom SAmple Consensus).

7. The method recited in Claim 2 wherein the blending is performed by using an alpha blending technology.

8. A user terminal for generating a panoramic image comprising,
a resolution adjusting part that adjusts resolutions for first and second input images, respectively, to thereby generate first and second adjusted images, wherein the resolutions of the first and the second adjusted images are determined by referring to preset relationship data with respect to the resolutions of the adjusted images versus the input images,
a pre-processing part that generates first and second pre-processed images which represents information on edges of the first and the second adjusted images by referring to a tangent vector vertical to a gradient vector showing changes in intensity or color of the first and the second adjusted images, respectively, and
a matching part that performs image matching operations between the first and the second pre-processed images and then determines a position where the first and the second input images are synthesized by referring to results of the image matching operations.

9. The user terminal recited in Claim 8 wherein it further comprises a synthesizing and blending part that generates a panoramic image by synthesizing the first and the second input images in accordance with the synthesis position determined and then blending the synthesized first and second input images.

10. The user terminal recited in Claim 8 wherein the resolutions of the first and the second adjusted images are determined within a scope of a matching rate between the first and the second adjusted images satisfying the preset level in a region where the first and the second adjusted images are overlapped.

11. The user terminal recited in Claim 8 wherein the gradient vector is calculated by a Sobel operator.

12. The user terminal recited in Claim 8 wherein the tangent vector is a vector acquired after rotating the gradient vector by 90 degrees counterclockwise.

13. The method recited in Claim 8 wherein the matching part performs image matching between the first and the second pre-processed images is performed by using a feature-based matching technology combined with RANSAC (RANdom SAmple Consensus).

14. The terminal recited in Claim 9 wherein the synthesizing and blending part performs the blending process by using an alpha blending technology.

15. A computer-readable recording medium in which a computer program is recorded to execute the method according to any one of Claims 1 to 7.
